**Europäisches Patentamt**

**European Patent Office**

**Office européen des brevets**

(11) Veröffentlichungsnummer: **0 207 889**

**B1**

(12) **EUROPÄISCHE PATENTSCHRIFT**

(45) Veröffentlichungstag der Patentschrift:
20.07.88

(21) Anmeldenummer: 86810233.6

(22) Anmeldetag: 02.06.86

(51) Int. Cl.⁴: **C 07 F 17/02**

(54) Verfahren zur Herstellung von Metallocenkomplexen.

(30) Priorität: 06.06.85 CH 2397/85

(43) Veröffentlichungstag der Anmeldung:
07.01.87 Patentblatt 87/2

(45) Bekanntmachung des Hinweises auf die Patenterteilung:
20.07.88 Patentblatt 88/29

(84) Benannte Vertragsstaaten:
BE CH DE FR GB IT LI NL

(56) Entgegenhaltungen:
EP-A-0 094 915

CHEMICAL ABSTRACTS, Band 84, Nr. 1, 5.-26.
Januar 1976, Seite 437, rechte Spalte,
Zusammenfassungsnr. 5119q, Columbus, Ohio, US;
A.N. NESMEYANOV et al.: "Catalysts and
promoting additives in ligand exchange in
ferrocene"
CHEMICAL ABSTRACTS, Band 80, Nr. 7, 18. Februar
1974, Seite 311, rechte Spalte,
Zusammenfassungsnr. 37251k, Columbus, Ohio,
US; A.N. NESMEYANOV et al.: "Arene ligand
exchange in arene cyclopentadienyliron
complexes"
CHEMICAL ABSTRACTS, Band 69, Nr. 1, 1. Juli 1968,
Seite 294, rechte Spalte, Zusammenfassungsnr.
2994a, Columbus, Ohio, US; E.A. LUK'YANETS et
al.: "Exchange of ligands in ferrocene"

(73) Patentinhaber: CIBA- GEIGY AG, Klybeckstrasse
141, CH- 4002 Basel (CH)

(72) Erfinder: Meier, Kurt, Dr., Ulmenstrasse 11, CH-
4123 Allschwil (CH)

**Beschreibung**

Die vorliegende Erfindung betrifft ein neuartiges Verfahren zur Herstellung von π-Aren-Eisen-Komplexen mittels Ligandenaustausches unter dem Einfluß von Wärme und unter Verwendung von Cyclopentadienyl-π-Aren-Eisen-Komplexen oder Indenyl-π-Aren-Eisen-Komplexen, in denen das π-Aren ein kondensiertes π-Aren ist. Die Bezeichnung π-Aren-Eisen-Komplex wird hierbei und im folgenden als Oberbegriff für Eisen-Komplexe mit einem π-Aren und einem Anion eines π-Arens als Liganden benutzt.

Aus der EP-A-94 915 ist bekannt, daß man Liganden von Metallocenkomplexen in Gegenwart von Lewis-Säure austauschen und so zu chemisch unterschiedlichen Metallocenen gelangen kann.

π-Arene, die empfindlich gegenüber Lewis-Säuren sind, lassen sich auf diese Weise nicht in Metallocene einführen, wie auch der Einsatz von Lewis-Säure-labilen Metallocenkomplexen als Edukt ausgeschloßen ist.

Ferner ist aus H. Schumann, Chemiker Zeitung 108, 239-251 (1984) bekannt, daß der Komplex [Cyclopentadienyl Fe(p-Xylol)]PF$_6$ in der Lage ist, p-Xylol photochemisch gegen andere Arene auszutauschen. Komplexe mit kondensierten Aromaten lassen sich nach dieser Methode nicht darstellen, da die Endprodukte - besonders in Lösung - sehr photolabil sind. Daneben sind die nach diesem Verfahren erzielbaren Ausbeuten an π-Aren-Eisen-Komplexen gering, und zudem ist die Verwendung von Lichtenergie teuer und unwirtschaftlich.

Es ist wünschenswert, ein Ligandenaustauschverfahren bereitzustellen, bei dem weder Lewissäuren noch Lichtenergie verwendet werden müßen.

Gegenstand der Erfindung ist demgemäß ein Verfahren zur Herstellung von Komplexen der allgemeinen Formel I

$$[R^1(R^2Fe^{II})_a]_b^{+a} (LQ_m)_a^{-b} \tag{I},$$

worin

a 1 oder 2 ist,
b eine ganze Zahl von 1 bis 3 darstellt,
m eine der Wertigkeit von L+b entsprechende ganze Zahl ist,
L für ein zweiwertiges bis siebenwertiges Metall oder Nichtmetall steht,
Q ein Halogenatom bedeutet,
$R^1$ ein π-Aren, ein O- oder S-Heteroaren oder ein Pyrrol oder ein Indol ist und
$R^2$ ein Cyclopentadienylanion oder ein Indenylanion ist,
dadurch gekennzeichnet, daß man einen Komplex der Formel II

$$[R^3(R^2Fe^{II})_a]_b^{+a} (LQ_m)_a^{-b} \tag{II},$$

worin a, b, m, L, Q und $R^2$ die angegebene Bedeutung haben und $R^3$ ein kondensiertes π-Aren ist, mit einem von $R^3$ verschiedenen π-Aren $R^1$, welches die angegebene Bedeutung hat, bei einer Temperatur von mindestens 60° C umsetzt.

Als π-Arene oder O- oder S-Heteroarene $R^1$ kommen insbesondere aromatische Kohlenwasserstoffe mit 6 bis 24 Kohlenstoffatomen oder O- oder S-haltige Heteroaromaten mit 4 bis 20 Kohlenstoffatomen in Betracht, wobei diese Gruppen gegebenenfalls durch gleiche oder verschiedene Reste wie $C_1$-$C_8$-Alkyl, orthoständig an das π-Aren gebundenes $C_2$-$C_6$-Alkylen, wobei gegebenenfalls ein oder zwei, vorzugsweise ein Kohlenstoffatom durch O- oder S-Atome ersetzt sein können, $C_1$-$C_8$-Alkoxy, Hydroxy, Hydroxy-$C_1$-$C_8$-Alkyl, $C_1$-$C_8$-Alkylthio, Carbo-$C_1$-$C_8$-alkoxy-$C_1$-$C_3$-alkyl oder $C_1$-$C_8$-Alkenyl einfach oder mehrfach substituiert sein können.

Die Alkyl-, Alkylen-, Heteroalkylen-, Alkoxy- Hydroxyalkyl-, Alkylthio-, Carboalkoxyalkyl- oder Alkenyl-Sustituenten können dabei geradkettig oder verzweigt sein.

Beispiele für Alkyl-, Alkylen-, Heteroalkylen-, Alkoxy-, Hydroxyalkyl-, Alkylthio-, Carboalkoxyalkyl- und Alkenyl-Substituenten sind Methyl, Ethyl, n-Propyl, Isopropyl, n-Butyl, sek.-Butyl, tert.-Butyl, n-Pentyl, n-Hexyl und n-Octyl, 1,2-Ethylen, 1,3-Propylen, 1,4-Butylen, 1-Methyl-1,4-butylen 2-Methyl-1,4-butylen, 1,5-Pentamethylen und 1,6-Hexamethylen, 2-Oxa-1,3-propylen, 2-Oxa-1,4-butylen, 1-Oxa-1,4-butylen, 1-Thia-1,4-butylen, 1,4-Dioxa-1,4-butylen, 1,4-Dithia-1,4-butylen und 3-Oxa-1,5-pentamethylen, Methoxy, Ethoxy, n-Propoxy, Isopropoxy, n-Butoxy, n-Hexyloxy und n-Octyloxy, Hydroxymethyl, 1-Hydroxyeth-2-yl, 1-Hydroxyeth-1-yl, 2-Hydroxyprop-2-yl, 1-Hydroxy-prop-3-yl, 1-Hydroxybut-4-yl, 1-Hydroxypent-5-yl, 1-Hydroxyhex-6-yl und 1-Hydroxyoct-8-yl, Methylthio, Ethylthio, n-Propylthio, Isopropylthio, n-Butylthio, n-Hexylthio und n-Octylthio, Carbomethoxymethyl, Carboethoxymethyl, Carbopropoxymethyl, Carboisopropoxymethyl, Carbo-n-butoxymethyl, Carbo-n-pentoxymethyl, Carbo-n-hexyloxymethyl, Carbo-n-octyloxymethyl, Carbomethoxyethyl, Carboethoxyethyl, Carbomethoxypropyl und Carboethoxypropyl, Vinyl, Allyl, 1- oder 2-Methylvinyl, Butenyl, Pentenyl, Hexenyl und Octenyl.

Als substituierte Arene $R^1$ werden solche bevorzugt, die einen oder zwei der obengenannten Substituenten, insbesondere Methyl, Ethyl, Hydroxy, Methoxy, Ethoxy, Carbomethoxymethyl oder Carboethoxymethyl enthalten.

Die π-Arene oder O- oder S-Heteroarene $R^1$ können einkernige, kondensierte mehrkernige oder unkondensierte mehrkernige Systeme darstellen, wobei in den zuletzt genannten Systemen die Kerne direkt und/oder über Brückenglieder wie $C_1$-$C_4$-Alkylen, $C_2$-$C_8$-Alkyliden, $C_5$-$C_8$-Cycloalkyliden, -CO-, -SO-, -SO$_2$-, -SiR$_2$- mit R = Phenyl, $C_1$-$C_4$-Alkyl oder $C_2$-$C_6$-Alkenyl, verknüpft sein können.

2

$R^1$ kann als $\pi$-Aren bis zu 6 Kerne aufweisen und stellt bevorzugt ein ein-, zwei- oder dreikerniges System dar.

Handelt es sich bei $R^1$ um ein O- oder S-Heteroaren, so steht $R^1$ bevorzugt für ein einkerniges oder ein kondensiertes zwei- oder dreikerniges System mit 1 oder 2 Heteroatomen besonders bevorzugt mit einem Heteroatom.

Als einkerniges $\pi$-Aren oder O- oder S-Heteroaren weist $R^1$ vorzugsweise 5 oder 6 Ringglieder auf.

Beispiele für geeignete Gruppen $R^1$ sind Benzol, Toluol, Xylole, Ethylbenzol, Methoxybenzol, Ethoxybenzol, Dimethoxybenzol, Trimethylbenzol, Naphthalin, 1,2-Dihydronaphthalin, 1,2,3,4-Tetrahydronaphthalin, Methylnaphthaline, Methoxynaphthaline, Ethoxynaphthaline, Biphenyl, Terphenyl, Stilben, Inden, Indan, Hydroxyindane, Methoxyindane, Fluoren, Phenanthren, Anthracen, 9,10-Dihydroanthracen, Triphenylen, Thiophen, Furan, Benzothiophen, Benzofuran, Chromen, Xanthen, Thioxanthen, Naphthothiophen, Thianthren, Biphenyloxid und Biphenylsulfid.

Das Pyrrol oder Indol kann wie das $\pi$-Aren $R^1$ substituiert sein, bevorzugt an den C-Atomen. Das N-Atom ist bevorzugt durch Alkyl, insbesondere $C_1$-$C_4$-Alkyl, substituiert.

$R^2$ in den Formeln I und II steht für ein Cyclopentadienylanion oder ein Indenylanion, wobei diese Anionen durch gleiche oder verschiedene Reste wie $C_1$-$C_8$-Alkyl oder $C_1$-$C_8$-Alkoxy substituiert sein können.

Beispiele für Substituenten am Cyclopentadienyl- oder Indenylanion $R^2$ sind Methyl, Ethyl, n-Propyl, Isopropyl, n-Butyl, sek.-Butyl, tert.-Butyl, n-Pentyl, n-Hexyl und n-Octyl, Methoxy, Ethoxy, n-Propoxy, Isopropoxy, n-Butoxy, n-Hexyloxy und n-Octyloxy.

Von den substituierten Cyclopentadienylanionen und Indenylanionen $R^2$ sind solche bevorzugt, die einen Substituenten, insbesondere eine Methyl- oder Methoxygruppe, enthalten.

In einer besonders bevorzugten Ausführungsform des Verfahrens stellt $R^2$ ein unsubstituiertes Cyclopentadienylanion dar.

$R^3$ als kondensiertes $\pi$-Aren enthält bevorzugt 10 bis 24 Kohlenstoffatome und kann gegebenenfalls einfach oder mehrfach mit z. B. $C_1$-$C_8$-Alkyl- oder $C_1$-$C_8$-Alkoxy-Gruppen substituiert sein.

Beispiele für Substituenten am kondensierten $\pi$-Aren $R^3$ sind Methyl, Ethyl, n-Propyl, Isopropyl, n-Butyl sek.-Butyl, tert.-Butyl, n-Pentyl, n-Hexyl und n-Octyl, Methoxy, Ethoxy, n-Propoxy, Isopropoxy, n-Butoxy, n-Hexyloxy und n-Octyloxy.

Als substituierte kondensierte $\pi$-Arene $R^3$ werden solche bevorzugt, die einen oder zwei der obengenannten Substituenten, insbesondere Methyl oder Methoxy enthalten.

Beispiele für geeignete kondensierte $\pi$-Arene $R^3$ sind Naphthalin, Methylnaphthaline, Methoxynaphthaline, Ethoxynaphthaline, Phenanthren, Anthracen, Pyren, Naphthacen, Coronen oder Perylen.

Bevorzugt ist $R^3$ Naphthalin, 1- oder 2-Methylnaphthalin, 1- oder 2-Methoxynaphthalin oder Pyren.

a und b in den Formeln I und II haben unabhängig voneinander bevorzugt den Wert 1.

Beispiele für geeignete Metalle und Nichtmetalle L sind Sb, B, P, As, Fe, Sn, Bi, Al, Ca, In, Ti, Zr, Sc, V, Cr, Mn und Cu; Lanthanide wie Ce, Pr und Nd oder Actinide wie Th, Pa, U oder Np.

Die Reaktion wird vorzugsweise bei einer Temperatur von mindestens 90°C ausgeführt, wobei die Reaktionszeiten von Stunden bis Tage bei L ist vorzugsweise P, As, B oder Sb, wobei P besonders bevorzugt ist.

Q stellt als Halogenatom bevorzugt F, Cl oder Br dar, wobei F besonders bevorzugt ist.

Komplexe Anionen $(LQ_m)^{-b}$ sind beispielsweise $BF_4^-$, $[B(Phenyl)_4]^-$, $PF_6^-$, $AsF_6^-$, $SbF_6^-$, $FeCl_4^-$, $SnCl_6^{2-}$, $SbCl_6^-$ und $BiCl_6^-$. Besonders bevorzugte komplexe Anionen $[LQ_m]^{-b}$ sind $SbF_6^-$, $AsF_6^-$, $BF_4^-$, $[B(Phenyl)_4]^-$ und $PF_6^-$ und insbesondere $BF_4^-$ und $PF_6^-$ tragen können. Die obere Temperaturgrenze wird durch die Stabilität der Metallocenkomplexe vorgegeben, doch wendet man im allgemeinen keine Temperaturen von mehr als 250°C, vorzugsweise nicht mehr als 200°C an.

Die Reaktion wird besonders bevorzugt in einem Temperaturbereich von 90-130°C ausgeführt.

Das Verfahren kann ohne Zusatz eines Lösungsmittels z. B. in der Schmelze oder aber unter Benutzung eines inerten Lösungsmittels ausgeführt werden, wobei als inertes Lösungsmittel ein Überschuß des $\pi$-Arens $R^1$ oder ein aprotisches Lösungsmittel in Frage kommt. Geeignete aprotische Lösungsmittel sind z. B. verzweigte und unverzweigte aliphatische oder cycloaliphatische Kohlenwasserstoffe wie n-Heptan, n-Oktan, n-Dekan, n-Undekan, n-Dodekan, Isooktan, Cyclohexan, Cycloheptan, Cyclooctan oder Gemische verschiedener aliphatischer und/oder cycloaliphatischer Kohlenwasserstoffe (Ligroin), halogenierte Kohlenwasserstoffe wie 1,2-Dichlorethan, 1,1,1-Trichlorethan, 1,1,2,2-Tetrachlorethan, 1,2-Dichlorpropan, Glycolether der allgemeinen Formel $R^4$-O-$(CH_2)_n$-O-$R^4$ mit n = 2 bis 6 und $R^4$ = $C_1$-$C_4$-Alkyl, besonders Methyl oder Ethyl, z. B. Ethylenglycoldimethylether oder Ethylenglycoldiethylether, Polyalkylenglycoldiether der Formel $R^4$-O$(C_nH_{2n}$O-$)_x$-$R^4$, worin $R^4$ $C_1$-$C_4$-Alkyl, besonders Methyl oder Ethyl ist, n für 2 - 6, bevorzugt 2 - 4 und x für 2 - 4 stehen, wie z. B. Diethylenglycoldimethylether oder Triethylenglycoldimethylether. Bevorzugt verwendet man halogenierte Kohlenwasserstoffe oder aber einen Überschuß des $\pi$-Arens $R^1$ als Lösungsmittel.

Im erfindungsgemäßen Verfahren gelingt der Ligandenaustausch überraschenderweise durch blosses Erhitzen der Komponenten und ohne Zusatz von Lewis-Säuren, womit sich die Herstellung von $\pi$-Aren-Eisen-Komplexen gegenüber bekannten Verfahren vereinfacht. Insbesondere entfällt als Verfahrensschritt die hydrolytische Aufarbritung des Reaktionsgemisches zur Abtrennung der Katalysator-Lewis-Säure, was ökologisch besonders günstig ist. Ferner können hohe Ausbeuten erzielt werden.

Als weiterer Vorteil bietet das Verfahren den Zugang zu einer Reihe von neuen Cyclopentadienyl-$\pi$-Aren-Eisen-Komplexen und Indenyl-$\pi$-Aren-Eisen Komplexen, die wegen der Empfindlichkeit der Reaktionspartner oder Substituenten, wie z. B. bei Thiophen gegenüber Lewis-Säuren bisher nicht erhältlich waren.

Die π-Aren-Eisen Komplexe der Formel I eignen sich z. B. als Photoinitiatoren für härtbare Zusammensetzungen mit kationisch polymerisierbaren organischen Materialien, wie es in der EP-A-94 915 beschrieben ist.

Die nachfolgenden Beispiele erläutern die Erfindung näher.

### Beispiel 1:

In einem 50 ml Dreihalsrundkolben werden 10 g (24,5 mmol) ($\eta^6$-1-Methylnaphthalin)($\eta^5$-cyclopentadienyl)eisen(II)-hexafluorophosphat mit 6 g (40 mmol) 5-Methoxyindan unter Inertgas während 2,5 h auf 130°C erwärmt. Nach dem Abkühlen der dunklen Lösung wird mit 50 ml Methylenchlorid verdünnt und mit Hexan bis zum Eintreten der Kristallisation versetzt. Es resultieren 9,66 g (95,2 %) ($\eta^6$-5-Methoxyindan)($\eta^5$-cyclopentadienyl)eisen(-II)-hexafluorophosphat in Form von gelben Kristallen vom Schmelzpunkt 122-124°C.

### Beispiele 2-8:

5 mmol Startkomplex ($R^3$FeCyclopentadienyl)$PF_6$ werden zusammen mit 5 mmol des einzuführenden Liganden $R^1$ und 5 ml 1,2-Dichlorethan in einem 25 ml Bombenrohr auf 120°C erhitzt. Die Aufarbeitung erfolgt wie in Beispiel 1 beschrieben. Die übrigen Reaktionsbedingungen und die Ergebnisse sind in der nachfolgenden Tabelle 1 angeführt.

### Tabelle 1

$$(R^3FeCyclopentadienyl)PF_6 + R^1 \rightarrow (R^1FeCyclopentadienyl)PF_6$$

| Beispiel | $R^3$ | $R^1$ | Reaktionszeit | Ausbeute | Schmelzpunkt |
|---|---|---|---|---|---|
| 2 | 1-Methylnaphthalin | Stilben | 4 Std. | 77,5 % | 165-168°C |
| 3 | 1-Methylnaphthalin | Thiophen | 2 Std. | 61,4 % | 184°C |
| 4 | Naphthalin | Toluol | 14 Std. | 88,1 % | 165°C |
| 5 | 1-Methylnaphtalin | Phenylessigsäureethylester | 3 Std. | 49,0 % | 102°C |
| 6 | 1-Methylnaphtalin | 3,5-Dicarbomethoxy-2,6-dimethyl-4-phenyl-1,4-dihydropyridin | 3 Std. | 59,0 % | 216°C (Zers.) |
| 7 | 1-Methylnaphtalin | 9-Benzylanthracen | 3 Std. | 78,0 % | 245°C (Zers.) |
| 8 | 1-Methylnaphtalin | 1-Methylpyrrol | 3 Std. | 25,0 % | 125-130°C (Zers.) |

### Beispiele 9-11:

5 mmol Startkomolex ($R_3$FeCyclopentadienyl)$+$($LA_m$)$^{-b}$ und 5 mmol des einzuführenden Liganden $R^1$ werden zusammen mit 30 ml 1,2-Dichlorpropan in einem 100 ml Sulfierkolben unter Rückfluß erhitzt (T = 95°C). Die Aufarbeitung erfolgt wie in Beispiel 1 beschrieben. Die übrigen Reaktionsbedingungen und die Ergebnisse sind in der nachfolgenden Tabelle 2 aufgeführt.

### Tabelle 2

$$(R^3FeCyclopentadienyl)+(LQ_m)^{-b} + R^1 \rightarrow (R^1FeCyclopentadienyl)+(LQ_m)^{-b}$$

| Beispiel | $R^3$ | $(LQ_m)^{-b}$ | $R^1$ | Reaktionszeit | Ausbeute | Schmelzpunkt |
|---|---|---|---|---|---|---|
| 9 | Pyren | $PF_6^-$ | 2-Methoxynaphthalin | 24 Std. | 85,0 % | 126-130°C |
| 10 | 1-Methylnaphthalin | $PF_6^-$ | 5-Hydroxyindan | 24 Std. | 37,5 % | 165-170°C |
| 11 | 1-Methylnaphthalin | $BF_4^-$ | Stilben | 24 Std. | 52,5 % | 140-141°C |

**Patentansprüche**

1. Verfahren zur Herstellung von Komplexen der allgemeinen Formel I

$$[R^1(R^2Fe^{II})_a]_b{}^{+a} (LQ_m)_a{}^{-b} \qquad (I),$$

worin
a    1 oder 2 ist,
b    eine ganze Zahl von 1 bis 3 darstellt,
m    eine der Wertigkeit von L+b entsprechende ganze Zahl ist,
L    für ein zweiwertiges bis siebenwertiges Metall oder Nichtmetall steht,
Q    ein Halogenatom bedeutet,
$R^1$    ein $\pi$-Aren, ein O- oder S-Heteroaren oder ein Pyrrol oder ein Indol ist und
$R^2$
     ein Cyclopentadienylanion oder ein Indenylanion ist,
dadurch gekennzeichnet, daß man einen Komplex der Formel II

$$[R^3(R^2Fe^{II})_a]_b{}^{+a} (LQ_m)_a{}^{-b} \qquad (II),$$

worin a, b, m, L, Q und $R^2$ die angegebene Bedeutung haben und $R^3$ ein kondensiertes $\pi$-Aren ist, mit einem von $R^3$ verschiedenen $\pi$-Aren $R^1$, welches die angegebene Bedeutung hat, bei einer Temperatur von mindestens 60°C umsetzt.

2. Verfahren gemäß Anspruch 1, dadurch gekennzeichnet, daß $R^1$ ein $\pi$-Aren mit 6 bis 24 Kohlenstoffatomen oder ein O- oder S-Heteroaren mit 3 bis 20 Kohlenstoffatomen oder ein Pyrrol darstellt.

3. Verfahren gemäß Anspruch 2, dadurch gekennzeichnet, daß das $\pi$-Aren und das O- oder S-Heteroaren durch $C_1$-$C_8$-Alkylgruppen orthoständig an das Aren gebundene $C_2$-$C_6$-Alkylen oder $C_1$-$C_5$-Heteroalkylen-Gruppen mit O und/oder S als Heteroatomen, $C_1$-$C_8$-Alkoxy-, $C_1$-$C_8$-Alkylthio-, Hydroxy-, Hydroxy-$C_1$-$C_8$-alkyl-, Carbo-$C_1$-$C_8$-alkoxy-$C_1$-$C_3$-alkyl- oder $C_1$-$C_8$-Alkenyl-Gruppen einfach oder mehrfach substituiert sind.

4. Verfahren gemäß Anspruch 1, dadurch gekennzeichnet, daß a 1 ist sowie $R^1$ für Benzol, Toluol, Xylol, Methoxybenzol, Naphthalin, Methoxynaphthalin, Methylnaphthalin, Biphenyl, Indan, Hydroxyindan, Methoxyindan, Inden, Stilben, Thiophen, Furan oder Benzothiophen steht.

5. Verfahren gemäß Anspruch 1, dadurch gekennzeichnet, daß das $\pi$-Aren $R^3$ 10 bis 24 Kohlenstoffatome enthält.

6. Verfahren gemäß Anspruch 5, dadurch gekennzeichnet, daß das $\pi$-Aren $R^3$ ein- oder mehrfach mit $C_1$-$C_8$-Alkyl- oder $C_1$-$C_8$-Alkoxy-Gruppen substituiert ist.

7. Verfahren gemäß Anspruch 1, dadurch gekennzeichnet, daß $R^3$ für Naphthalin, 1- oder 2-Methylnaphthalin, 1- oder 2-Methoxynaphthalin, Phenanthren, Anthracen oder Pyren steht.

8. Verfahren gemäß Anspruch 1, dadurch gekennzeichnet, daß $R^2$ ein unsubstituiertes oder ein- oder mehrfach mit $C_1$-$C_8$-Alkyl- oder $C_1$-$C_8$-Alkoxygruppen substituiertes Cyclopentadienylanion ist.

9. Verfahren gemäß Anspruch 1, dadurch gekennzeichnet, daß $(LQ_m)^{-b}$ für die komplexen Anionen $SbF_6{}^-$, $BF_4{}^-$, $AsF_6{}^-$, $PF_6{}^-$ oder $[B(Phenyl)_4]^-$ steht.

10. Verfahren gemäß Anspruch 1, dadurch gekennzeichnet, daß man die Reaktion in Gegenwart eines inerten aprotischen Lösungsmittels ausführt.

11. Verfahren gemäß Anspruch 10, dadurch gekennzeichnet, daß das Lösungsmittel das $\pi$-Aren $R^1$ ist.

12. Verfahren gemäß Anspruch 11, dadurch gekennzeichnet, daß man die Reaktion in der Schmelze ausführt.


**Claims**

1. A process for the preparation of a complex of the general formula I

$$[R^1(R^2Fe^{II})_a]_b{}^{+a} (LQ_m)_a{}^{-b} \qquad (I)$$

in which
a    is 1 or 2,
b    is an integer from 1 to 3,
m
     is an integer corresponding to the valency of L+b,
L    is a divalent to heptavalent metal or non-metal,
Q    is a halogen atom,
$R^1$ is a $\pi$-arene, an O- or S-heteroarene or a pyrrole or an indole and
$R^2$ is a cyclopentadienyl anion or an indenyl anion,
which process comprises reacting a complex of formula II

$[R^3(R^2Fe^{II})_a]_b^{+a} (LQ_m)_a^{-b}$ (II)

in which a, b, m, L, Q and $R^2$ are as defined above and $R^3$ is a condensed $\pi$-arene, with a $\pi$-arene $R^1$ which differs from $R^3$ and is as defined above, at a temperature of at least 60°C.

2. A process according to claim 1, wherein $R^1$ is a $\pi$-arene containing 6 to 24 carbon atoms, or an O- or S-heteroarene containing 3 to 20 carbon atoms, or a pyrrole.

3. A process according to claim 2, wherein the $\pi$-arene and the O- or S-heteroatene are mono- or polysubstituted by $C_1$-$C_8$alkyl groups, $C_2$-$C_6$alkylene groups or $C_1$-$C_5$heteroalkylene groups containing O and/or S atoms as hetero atoms, which alkylene or heteroalkylene groups are attached in the ortho-position to the arene, or by $C_1$-$C_8$alkoxy, $C_1$-$C_8$alkylthio, hydroxyl, hydroxy-$C_1$-$C_8$alkyl, carbo-$C_1$-$C_8$alkoxy-$C_1$-$C_3$alkyl or $C_1$-$C_8$alkenyl groups.

4. A process according to claim 1, wherein a is 1 and $R^1$ is benzene, toluene, xylene, methoybenzene, naphthalene, methoxynaphthalene, methylnaphthalene, biphenyl, indan, hydroxyindan, methoxyindan, indene, stilbene, thiophene, furan or benzothiophene.

5. A process according to claim 1, wherein the $\pi$-arene $R^3$ contains 10 to 24 carbon atoms.

6. A process according to claim 5, wherein the $\pi$-arene $R^3$ is mono- or polysubstituted by $C_1$-$C_8$alkyl or $C_1$-$C_8$alkoxy groups.

7. A process according to claim 1, wherein $R^3$ is naphthalene, 1- or 2-methylnaphthalene, 1- or 2-methoxynaphthalene, phenanthrene, anthracene or pyrene.

8. A process according to claim 1, wherein $R^2$ is a cyclopentadienyl anion which is unsubstituted or mono- or polysubstituted by $C_1$-$C_8$alkyl or $C_1$-$C_8$alkoxy groups.

9. A process according to claim 1, wherein $(LQ_m)^{-b}$ is one of the complex anions $SbF_6^-$, $BF_4^-$, $AsF_6^-$, $PF_6^-$ or $[B(phenyl)_4]^-$.

10. A process according to claim 1, wherein the reaction is carried out in the presence of an inert aprotic solvent.

11. A process according to claim 10, wherein the solvent is the $\pi$-arene $R^1$.

12. A process according to claim 1, wherein the reaction is carried out in the melt.


## Revendications

1. Procédé pour préparer des complexes répondant à la formule générale I:

$[R^1(R^2Fe^{II})_a]_b^{+a} (LQ_m)_a^{-b}$ (I)

dans laquelle:
a    est égal à 1 ou 2,
b    désigne un nombre entier de 1 à 3,
m    représente un nombre entier égal à la somme de b et de la valence de L,
L représente un métal ou un non-métal dont la valence est comprise entre 2 et 7,
Q représente un atome d'halogène,
$R^1$    représente un $\pi$-arène, un hétéroarène qui contient O ou S, un pyrrole ou un indole et
$R^2$    représente un anion cyclopentadiényle ou un anion indényle,
procédé caractérisé en ce qu'on fait réagir un complexe répondant à la formule II:

$[R^3(R^2Fe^{II})_a]_b^{+a} (LQ_m)_a^{-b}$ (II)

dans laquelle a, b, m, L, Q et $R^2$ ont les significations indiquées ci-dessus et $R^3$ représente un $\pi$-arène condensé, avec un $\pi$-arène différent de $R^3$, en l'espèce un $\pi$-arène $R^1$ tel que défini ci-dessus, à une température d'au moins 60°C.

2. Procédé selon la revendication 1 caractérisé en ce que $R^1$ représente un $\pi$-arène contenant de 6 à 24 atomes de carbone, un hétéro-arène à O ou S qui contient de 3 à 20 atomes de carbone, ou un pyrrole.

3. Procédé selon la revendication 2 caractérisé en ce que le $\pi$-arène ou l'hétéro-arène à O ou S porte un ou plusieurs substituants pris dans l'ensemble constitué par les alkyles en $C_1$-$C_8$, les alkylènes en $C_2$-$C_6$ et les hétéro-alkylènes en $C_1$-$C_5$ à O et/ou S comme hétéroatomes, ces alkylènes et hétéro-alkylènes étant liés à l'arène par des positions ortho, les alcoxy en $C_1$-$C_8$, les alkylthio en $C_1$-$C_8$, l'hydroxy, les hydroxyalkyles en $C_1$-$C_8$, les alcoxycarbonylalkyles dont l'alcoxy contient de 1 à 8 atomes de carbone et l'alkyle de 1 à 3, et les alcényles en $C_1$-$C_8$.

4. Procédé selon la revendication 1 caractérisé en ce que a est égal à 1 et $R^1$ représente le benzène, le toluène, un xylène, le méthoxybenzène, le naphtalène, un méthoxynaphtalène, un méthylnaphtalène, le biphényle, l'indane, un hydroxy-indane, un méthoxyindane, l'indène, le stilbène, le thiophène, le furanne ou le benzothiophène.

5. Procédé selon la revendication 1 caractérisé en ce que le $\pi$-arène $R^3$ contient de 10 à 24 atomes de carbone.

6. Procédé selon la revendication 5 caractérisé en ce que le $\pi$-arène $R^3$ porte un ou plusieurs substituants pris dans l'ensemble constitué par les alkyles en $C_1$-$C_8$ et les alcoxy en $C_1$-$C_8$.

7. Procédé selon la revendication 1 caractérisé en ce que $R^3$ représente le naphtalène, le méthyl-1 naphtalène, le méthyl-2 naphtalène, le méthoxy-1 naphtalène, le méthoxy-2 naphtalène, le phénanthrène, l'anthracène ou le pyrène.

8. Procédé selon la revendication 1 caractériseé en ce que $R^2$ est un anion cyclopentadiényle non substitué ou porteur d'un ou plusieurs substituants pris dans l'ensemble constitué par les alkyles en $C_1$-$C_8$ et les alcoxy en $C_1$-$C_8$.

9. Procédé selon la revendication 1 caractérisé en ce que $(LQ_m)^{-b}$ représente l'un des anions complexes $SbF_6^-$, $BF_4^-$, $AsF_6^-$, $PF_6^-$ et $[B(phényl)_4]^-$.

10. Procédé selon la revendication 1 caractérisé en ce que la réaction est effectuée en présence d'un solvant aprotique inerte.

11. Procédé selon la revendication 10 caractérisé en ce que le solvant est le $\pi$-arène $R^1$.

12. Procédé selon la revendication 1 caractérisé en ce que la réaction est effectuée sur les produits fondus.